# EUROPEAN PATENT SPECIFICATION

(11) **EP 1 571 049 B1**
(45) Date of publication and mention of the grant of the patent: **05.03.2008**
(21) Application number: 03777395.9
(22) Date of filing: 09.12.2003
(51) Int. Cl.: B60R 21/26, B01J 7/00

(54) **GAS GENERATOR FOR AIR BAG**
GASGENERATOR FÜR AIRBAG
GENERATEUR DE GAZ POUR AIRBAG

(30) Priority: 09.12.2002 JP 2002356704; 12.11.2003 JP 2003382436
(43) Date of publication of application: 07.09.2005
(73) Proprietor: Daicel Chemical Industries, Ltd., Kita-ku, Osaka-shi Osaka 530-0001 (JP)
(72) Inventor: MATSUDA, Naoki c/o Daicel Chemical Industries, Ltd, Tatsuno-shi, Hyogo 671-1681 (JP); YAMAZAKI, Masayuki Daicel Chemical Ind., Ltd., Tatsuno-shi, Hyogo 671-1681 (JP); IWAI, Yasunori, Shijyonawate-shi, Osaka 575-0051 (JP)
(74) Representative: Grünecker, Kinkeldey, Stockmair & Schwanhäusser Anwaltssozietät
(86) International application number: PCT/JP2003/015725
(87) International publication number: WO 2004/052693

(56) References cited:
- EP-A- 0 773 146
- EP-A- 0 864 553
- EP-A1- 0 857 627
- DE-C1- 3 921 472
- DE-C1- 3 921 473
- JP-A- 2001 097 172
- JP-A- 2002 046 569
- JP-B2- 6 067 711
- US-A- 5 100 174
- US-A- 5 149 129
- US-A1- 2002 017 778
- US-B1- 6 196 581
- PATENT ABSTRACTS OF JAPAN vol. 1997, no. 07, 31 July 1997 (1997-07-31) & JP 09 066795 A (NIPPON KAYAKU CO LTD; SENSOR TECHNOL KK), 11 March 1997 (1997-03-11)

## Description

### Technical Field to which the Invention Belongs

The present invention relates to a gas generator for an air bag, according to the preamble of claim 1, for protecting a passenger from an impact.

### Prior Art

A gas generator of the above type is known from EP-A-0 773 146. Related gas generators are known from EP-A-0 864 553, US-B1-6,196,581, US 2002/017778 A1, JP-B2-6067711, US-A-5,100,174 and EP-A1-0 857627.

A gas generator for an air bag incorporated in an air bag system mounted in an automobile needs to satisfy various requirements in view of protection of a passenger. For example, the gas generator is required to reliably operate even after ten years which correspond to normal service life of a vehicle mounted with the gas generator. Further, when the air bag is inflated and developed, it is required that the air bag is not heated excessively, combustion residue (soot) is not mixed into the air bag, and the passenger does not feel nervous or does not receive physical influence.

A coolant/filter is disposed in the gas generator to cool a high temperature combustion gas generated by combustion of a gas generating agent or collect the combustion residue. In order to reduce the gas generator in both size and weight, it is required to lighten the coolant/filter without deteriorating the cooling effect.

Further, a gas generating agent used for the gas generator does not always have high ignitability depending upon its composition. Even such a gas generating agent, it is required to start igniting and to complete ignition within a predetermined time, and to introduce a gas into the air bag so that a passenger is restrained at the time of collision.

Besides, in the operation process of the gas generator, if a portion of the gas generator where ignition energy from ignition means is transmitted to the gas generating agent and a portion of the gas generator where a gas generated by the combustion is discharged from the combustion chamber are close to each other, it is considered that a portion of the ignition energy is discharged from the combustion chamber as it is, or the ignition energy is transmitted to the entire gas generating agent in the combustion chamber and a portion of the gas generating agent is remained unburnt. In such a case, there is an adverse possibility that the air bag can not sufficiently be inflated and developed.

US-B 5,200,574 is prior art related to the present invention.

### Disclosure of the Invention

It is an object of the present invention to provide a gas generator for an air bag having a structure in which the gas generator is reduced in both size and weight, the cooling effect of a coolant/filter or the like is enhanced, and the ignitability of the gas generating agent is enhanced.

As solving means of the problem, the invention provides a gas generator for an air bag according to claim 1. The gas generator according to the first aspect disclosed herein comprises a housing having a gas discharge port, an ignition means chamber accommodating therein an ignition means which is activated by the impact, and a combustion chamber accommodating therein a gas generating agent which is ignited and burnt to generate a combustion gas, a cylindrical filter disposed between the combustion chamber and the gas discharge port, and in which the combustion gas passes through the filter and is discharged from the gas discharge port, wherein
an inner cylindrical shielding plate is disposed inside the cylindrical filter,
the inner cylindrical shielding plate is disposed such that its lower end opening peripheral edge comes into contact with a housing bottom surface and a space is formed between an upper end opening peripheral edge of the inner cylindrical shielding plate and a housing ceiling surface, a portion having excellent air permeability is provided between an inner peripheral surface of the cylindrical filter and the inner cylindrical shielding plate.

Since heat resistance is required for the inner cylindrical shielding plate, it is made of metal such as stainless metal.

When the ignition means is activated, the ignition energy (flame, high temperature combustion gas or the like) is discharged into the combustion chamber, and the gas generating agent is ignited and burnt. At that time, since the ignition energy intensively collides against the cylindrical filter (coolant/filter) portion existing in the advancing direction of the ignition energy, this portion of the cylindrical filter is largely damaged in some cases. Further, since the combustion gas generated by combustion of the gas generating agent passes through the cylindrical filter in its widthwise direction, the cooling and filtering (filtering of combustion residue) time becomes only the passing time in the widthwise direction.

Thereupon, if the inner cylindrical shielding plate is disposed, the ignition energy collides against the inner cylindrical shielding plate, the ignition energy is prevented from intensively colliding against only one portion of the cylindrical filter.

Further, since a portion having excellent air permeability is provided between an inner peripheral surface of the cylindrical filter and the inner cylindrical shielding plate, a portion of the combustion gas passes through the entire region of the cylindrical filter in the axial direction and the widthwise direction, and the cooling and filtering effects are enhanced and the mass of the cylindrical filter can be reduced correspondingly.

The inner cylindrical shielding plate exhibits the following effect at the same time. That is, when no inner cylindrical shielding plate exists and a large amount of gas generating agent exists in a direction other than the discharging direction of the ignition energy into the combustion chamber, the gas generating agent existing in that direction is less prone to be ignited. Thereupon, the inner cylindrical shielding plate is disposed such that the ignition energy collides against the inner cylindrical shielding plate, the advancing direction of the ignition energy is changed and thus, the ignitability and flammability of the entire gas generating agent charged into the combustion chamber are enhanced. Especially when the gas generating agent has low ignitability, this structure is preferable.

A second aspect disclosed herein relates to a gas generator for an air bag comprising a housing having a gas discharge port, an ignition means chamber accommodating therein ignition means which is activated by the impact, and a combustion chamber accommodating therein a gas generating agent which is ignited and burnt to generate a combustion gas, a cylindrical filter disposed between the combustion chamber and the a gas discharge port, in which the combustion gas passes through the filter and is discharged from the gas discharge port, wherein
an inner cylindrical shielding plate and an outer cylindrical shielding plate are respectively disposed inside and outside the cylindrical filter,
the inner cylindrical shielding plate is disposed such that its lower end opening peripheral edge comes into contact with a housing bottom surface and a space is formed between an upper end opening peripheral edge of the inner cylindrical shielding plate and a housing ceiling surface, a portion having excellent air permeability is provided between an inner peripheral surface of the cylindrical filter and the inner cylindrical shielding plate,
the outer cylindrical shielding plate is disposed such that its upper end opening peripheral edge comes into contact with the housing ceiling surface, a space is provided between the housing bottom surface and a lower end opening peripheral edge of the outer cylindrical shielding plate, and a gap is generated between the outer cylindrical shielding plate and a housing peripheral wall having the a gas discharge port.

By providing the inner cylindrical shielding plate and the outer cylindrical shielding plate in combination in this manner, the effect obtained by the first aspect is further enhanced. Especially, since the inner cylindrical shielding plate and the outer cylindrical shielding plate are disposed, the combustion gas is allowed to flow forcibly in the axial direction of the cylindrical filter and thus, the contact time between the combustion gas and the cylindrical filter becomes long, the combustion gas can flow through the entire region of the cylindrical filter in the axial direction and the widthwise direction, the cooling and filtering effects are enhanced. Thus, the thickness of the cylindrical filter or the like can be reduced, and the mass of the cylindrical filter can be reduced.

As to the third aspect in the gas generator for an air bag of the inventions according to first and second aspects, the lower end opening peripheral edge of the inner cylindrical shielding plate comes into contact with the housing bottom surface, the upper end opening peripheral edge of the inner cylindrical shielding plate comes into contact with the housing ceiling surface, the upper end opening peripheral edge side of the inner cylindrical shielding plate has a vent hole, a portion having excellent air permeability is provided between an inner peripheral surface of the cylindrical filter and the inner cylindrical shielding plate.

In the first aspect, a space is provided between the upper end opening peripheral edge of the inner cylindrical shielding plate and the housing ceiling surface, the combustion gas passes through the gap and moves toward the cylindrical filter. Whereas, according to the third aspect, the entire surface of the inner peripheral surface of the cylindrical filter is covered with the inner cylindrical shielding plate, and the vent hole is provided in a portion corresponding to the space in the first aspect.

As to the fourth aspect, in the gas generator for an air bag of the inventions according to the second and third aspect, the outer cylindrical shielding plate is disposed such that its upper end opening peripheral edge comes into contact with the housing ceiling surface and the lower end opening peripheral edge of the outer cylindrical shielding plate comes into contact with the housing bottom surface, the lower end opening peripheral edge side of the outer cylindrical shielding plate has a vent hole, and a gap is generated between the housing peripheral wall having the a gas discharge port and the outer cylindrical shielding plate.

In the second aspect a space is provided between the housing bottom surface and the lower end opening peripheral edge of the outer cylindrical shielding plate, the combustion gas reaches the gas discharge port through the space. Whereas, in the Fourth aspect the entire surface of the outer peripheral surface of the cylindrical filter is covered by the outer cylindrical shielding plate, and the vent hole is provided in the portion corresponding to the space in the Second aspect.

The Fifth aspect provides a gas generator for an air bag comprising a housing having a gas discharge port, an ignition means chamber accommodating therein ignition means which is activated by the impact, and a combustion chamber accommodating therein a gas generating agent which is ignited and burnt to generate a combustion gas, a cylindrical filter disposed between the combustion chamber and the gas discharge port, in which the combustion gas passes through the filter and is discharged from the gas discharge port, wherein
an inner space of an inner cylinder disposed in a central portion of the housing forms an ignition means chamber, the ignition means chamber and the combustion chamber are in communication with each other through the communication hole formed in a peripheral wall of the inner cylinder,
an inner cylindrical shielding plate is disposed inside the cylindrical filter, an upper end opening peripheral edge of the inner cylindrical shielding plate comes into contact with a housing ceiling surface and a combustion gas can pass between the lower end opening peripheral edge and a housing bottom surface, or the lower end opening peripheral edge of the inner cylindrical shielding plate comes into contact with the housing bottom surface and the combustion gas can pass between the upper end opening peripheral edge and the housing ceiling surface, a portion having excellent air permeability is provided between an inner peripheral surface of the cylindrical filter and the inner cylindrical shielding plate,
a communication hole formed in the peripheral wall of the inner cylinder is provided at the position opposite to the inner cylindrical shielding plate.

When the ignition means chamber and the combustion chamber are in communication with each other through the communication hole provided in the peripheral wall of the inner cylinder, a portion where the ignition energy collides against the cylindrical filter is different depending upon the forming position of the communication hole which becomes a passage through which the ignition energy (high temperature gas, flame or the like) is discharged toward the combustion chamber. When the communication hole partially exists in the inner cylinder, the ignition energy amount which collides against the cylindrical filter is increased. Further, if the diameter of the communication hole is small or the number of communication holes is small, the flow rate of the ignition energy discharged from the communication holes becomes fast and thus, the ignition energy collides against a portion of the cylindrical filter.

Therefore, in accordance with a position of the communication hole, when the inner cylindrical shielding plate is extended downward or upward from the housing ceiling surface or housing bottom surface and the inner cylindrical shielding plate is disposed to face the communication hole, the ignition energy discharged from the communication hole toward the combustion chamber absolutely collides against the inner cylindrical shielding plate. Thus, the ignition energy is prevented from intensively colliding against the portion of the cylindrical filter irrespective of the forming position of the communication hole, a size of the communication hole and the number of communication holes or the like and thus, the filter is not damaged. Like the first aspect, the cooling and filtering effects by the cylindrical filter are enhanced, and ignitability of the gas generating agent in the combustion chamber is enhanced. This structure is preferable when a gas generating agent having low ignitability is to be burnt.

As to the sixth aspect, in the gas generator for an air bag of the fifth aspect, when an upper end opening peripheral edge of the inner cylindrical shielding plate comes into contact with a housing ceiling surface and a space is formed between the lower end opening peripheral edge and the housing bottom surface or when the upper end opening peripheral edge of the inner cylindrical shielding plate comes into contact with the housing ceiling surface and the lower end opening peripheral edge comes into contact with the housing bottom surface and plural vent holes are formed in the lower end opening peripheral edge,
a relationship between a forming position of a communication hole, which is formed in the peripheral wall of the inner cylinder, in the axial direction of the housing and a position of a tip end of the inner cylindrical shielding plate or a forming position of the vent hole is set such that if a height from the housing ceiling surface to the housing bottom surface is defined as L,
the communication hole is formed in a peripheral wall of the inner cylinder in the range of 0.05 L to 0.6 L from the housing ceiling surface,
the position of the tip end of the inner cylindrical shielding plate or the forming position of the vent hole exists in the range of 0.3 L to 0.8 L from the housing ceiling surface, and the communication hole and the inner cylindrical shielding plate are exactly opposite to each other.

The position of the communication hole is determined based on the center of the communication hole. Since the communication hole has a small diameter (e.g., 1 to 4 mm), even if the position is determined based on the center of the hole, the effect of the invention is not deteriorated. When plural communication holes are arranged in the axial direction, the communication hole which is the closest to the housing bottom surface is the reference.

The forming position of the vent hole is determined based on the lower end of the vent hole and is a position where the communication hole and the vent hole are not exactly opposite to each other (communication hole is exactly opposite to a portion of the plate where no vent hole is formed).

This invention provides the means for more reliably exhibiting the effect of the fifth aspect, and the adjusting ranges of the forming position of the communication hole and the position of the tip end of the inner cylindrical shielding plate (when there exists the vent hole, the position of the vent hole) are determined.

The positional relationship can appropriately be adjusted such that the respective elements are in the above ranges, and the communication hole and the inner cylindrical shielding plate are exactly opposite to each other. For example, when the forming position of the communication hole is 0.05 L, the position of the tip end of the shielding plate can be 0.3 L, and when the forming position of the vent hole is 0.6 L, the position of the tip end of the shielding plate can be 0.8 L.

As to the seventh aspect, in the gas generator for an air bag of the fifth aspect, when the lower end opening peripheral edge of the inner cylindrical shielding plate comes into contact with the housing bottom surface and a space is generated between the housing ceiling surface and the upper end opening peripheral edge of the inner cylindrical shielding plate, or when the lower end opening peripheral edge of the inner cylindrical shielding plate comes into contact with the housing bottom surface and the upper end opening peripheral edge of the inner cylindrical shielding plate comes into contact with the housing ceiling surface and plural vent holes are formed in the upper end opening peripheral edge,
a relationship between a forming position of the communication hole, which is formed in the peripheral wall of the inner cylinder, in the axial direction of the housing and a position of the tip end of the inner cylindrical shielding plate or the forming position of the vent hole is set such that if a height from the housing bottom surface to the housing ceiling surface is defined as L,
the communication hole is formed in the inner cylinder peripheral wall in the range of 0.05 L to 0.6 L from the housing bottom surface,
the position of the tip end of the inner cylindrical shielding plate or the forming position of the vent hole exists in the range of 0.3 L to 0.8 L from the housing bottom surface,
the communication hole and the inner cylindrical shielding plate are exactly opposite to each other.

The position of the communication hole is determined based on the center of the communication hole. Since the diameter of the communication hole is small (e.g., 1 to 4 mm), even if the position is determined based on the center of the hole, the effect of the invention is not deteriorated. When plural communication holes are arranged in the axial direction, the communication hole which is the closest to the housing ceiling surface is the reference.

The forming position of the vent hole is determined based on the upper end and is a position where the communication hole and the vent hole are not exactly opposite to each other (communication hole is exactly opposite to a portion of the plate where no vent hole is formed).

This invention more reliably exhibits the effect of the I fifth aspect, by solving means similar to the sixth aspect,

As to the eighth aspect, in the gas generator for an air bag of any one of the fifth to seventh, the inner cylindrical shielding plate comprises an annular bottom surface and an annular peripheral wall provided vertically with the annular bottom surface, a diameter of the annular bottom surface is set greater than a diameter of the annular bottom surface,
the annular bottom surface comes into contact with the housing ceiling surface or the housing bottom surface, an inner peripheral edge of the annular bottom surface abuts against the inner cylinder peripheral wall or an outer peripheral edge of the annular bottom surface abuts against an inner peripheral surface of the cylindrical filter.

The width of the annular bottom surface (difference between the outer diameter and the inner diameter of the annular bottom surface) and a difference between the inner diameter of the cylindrical filter and the outer diameter of the inner cylinder can be about the same. In this case, the inner peripheral edge of the annular bottom surface abuts against the outer peripheral wall of the inner cylinder, and the outer peripheral edge of the annular bottom surface abuts against the inner peripheral surface of the cylindrical filter.

By using the inner cylindrical shielding plate having such annular bottom surface and annular peripheral wall, the positioning between the inner cylinder and the cylindrical filter becomes easy, and since a space is provided between the inner cylindrical shielding plate and the cylindrical filter, the portion having excellent air permeability can easily be formed.

As to the ninth aspect, in the gas generator for an air bag of any one of the fifth to eighth aspect, an outer cylindrical shielding plate is further disposed outside the cylindrical filter, one end opening peripheral edge of the outer cylindrical shielding plate comes into contact with the housing ceiling surface or the housing bottom surface, the other end opening peripheral edge is disposed at a distance from the housing bottom surface or the housing ceiling surface, and also a gap is generated between the outer cylindrical shielding plate and the housing peripheral wall having the a gas discharge port.

This invention exhibits the same effect as that of the second aspect, the outer cylindrical shielding plate is used in combination with the inner cylindrical shielding plate, and when the inner cylindrical shielding plate is mounted such that it extends from the housing ceiling surface downward, the outer cylindrical shielding plate is upwardly extended from the housing bottom surface and mounted. When the mounting method of the inner cylindrical shielding plate is opposite, the outer cylindrical shielding plate is mounted also in an opposite manner.

As to the tenth aspect, in the gas generator for an air bag of any one of the fifth to eighth aspect, an outer cylindrical shielding plate is further disposed outside the cylindrical filter, one end opening peripheral edge of the outer cylindrical shielding plate comes into contact with the housing ceiling surface or the housing bottom surface, the other end opening peripheral edge of the outer cylindrical shielding plate comes into contact with the housing bottom surface or the housing ceiling surface, the other end opening peripheral edge has a vent hole, a gap is generated between the outer cylindrical shielding plate and the housing peripheral wall having the a gas discharge port.

The structure of this invention is different from that of the eight aspect, only in the outer cylindrical shielding plate, and exhibits the same effect as that of the second aspect,

As to the eleventh aspect, in the gas generator for an air bag of any one of the first to tenth aspect, a portion having excellent air permeability provided between an inner peripheral surface of the cylindrical filter and an inner cylindrical shielding plate is a cylindrical space provided between the inner peripheral surface of the cylindrical filter and the inner cylindrical shielding plate or a coarse structure of the cylindrical filter.

As to the twelfth aspect, in the gas generator for an air bag of any one of the first to eleventh aspect, a bulk density of the cylindrical filter is 1 to 5 g/cm³, and a thickness of the cylindrical filter is 3 to 10 mm.

As to the thirteenth aspect, in the gas generator for an air bag of any one of the first to twelfth aspect, a width of the portion having excellent air permeability provided between a surface of the cylindrical filter and the inner cylindrical shielding plate is 0.5 to 3 mm.

According to the fourteenth aspect, in the gas generator for an air bag of any one of the Above aspect the ignition means comprises an electric igniter which is activated by igniting current and a transfer charge which is ignited by activation of the electric igniter, a gas generating agent having a combustion temperature of 1000 to 3000°C is used as the transfer charge, and a gas generating agent having a combustion temperature of 1000 to 1700°C is used as the gas generating agent for inflating the air bag, which is disposed in the combustion chamber.

As a priming of the electric igniter used in the ignition means, ZPP (zirconium and potassium perchlarate; ZPP is 90 to 300 g) is known. A gas generating agent having composition using nitroguanidine as fuel and using strontium nitrate as oxidizer can be used as the gas generating agent (gas generating agent 1) having a combustion temperature of 1700 to 3000°C. This gas generating agent has excellent ignitability, and can be ignited and burnt directly by an igniter including ZPP of the above amount. At that time, if the gas generating agent 1 is of a cylindrical shape having a single through-hole or many through-holes, or of a cylindrical shape having single or many hollows, or of a columnar pellet shape, the combustion completion time of the gas generating agent 1 can be adjusted.

As the gas generating agent having the combustion temperature of 1000 to 1700°C, a gas generating agent (gas generating agent 2) having composition using guanidine nitrate as fuel and using basic copper oxide as oxidizer can be used. Since this gas generating agent 2 is inferior to the gas generating agent 1 in ignitability, it is difficult to ignite and burn the gas generating agent 2 directly only by the igniter , but since the combustion temperature is low, a load to the coolant is small. Thus, the coolant can be simplified, and the size of the entire gas generator can be reduced. The poor ignitability of the gas generating agent 2 can be overcome by combining the gas generating agent 2 with the gas generating agent 1 having the combustion temperature of 1700 to 3000°C.

A boron niter is conventionally known as the transfer charge, but the boron niter is powder and the combustion is completed instantaneously. Thus, the boron niter is not suitable for igniting the gas generating agent having poor ignitability such as the gas generating agent 2. Hence, if the gas generating agent 1 which can maintain the combustion durability in some degree is used as the transfer charge by adjusting its shape or the like, the ignitability for the gas generating agent 2 can be enhanced. Further, since the transfer charge is also a gas generating agent, a gas generated by combustion of the transfer charge can be used as a gas for developing the air bag.

According to the gas generator for an air bag of the present invention, the gas generator can be reduced in both size and weight, and the cooling effect of the combustion gas and collecting effect of the combustion residue can be enhanced.

### Brief Description of the Drawings

Fig. 1 is an axial sectional view of a gas generator for an air bag;
Fig. 2 is a schematic plan view for explaining a layout of a second transfer charge in Fig. 1;
Fig. 3 is a schematic sectional view of another embodiment shown in Fig. 2;
Fig. 4 is a conceptional view for explaining an outflow state of a combustion gas;
Fig. 5 is an axial sectional view of a gas generator for an air bag according to the invention; and
Fig. 6 is a view for explaining a positional relationship between a communication hole and an inner cylindrical shielding plate in Fig. 5.

### Explanation of Numerals

- 10, 100: gas generator for air bag
- 11, 101: housing
- 15, 115: inner cylinder
- 20, 120: first combustion chamber (combustion chamber)
- 25: second combustion chamber
- 31: first igniter
- 32: second igniter
- 53: third through-hole
- 65, 130: cylindrical filter
- 66, 140: inner cylindrical shielding plate
- 67: outer cylindrical shielding plate
- 71, 135: first gap
- 72, 150: second gap

### Embodiments of the Invention

### (1) First Embodiment

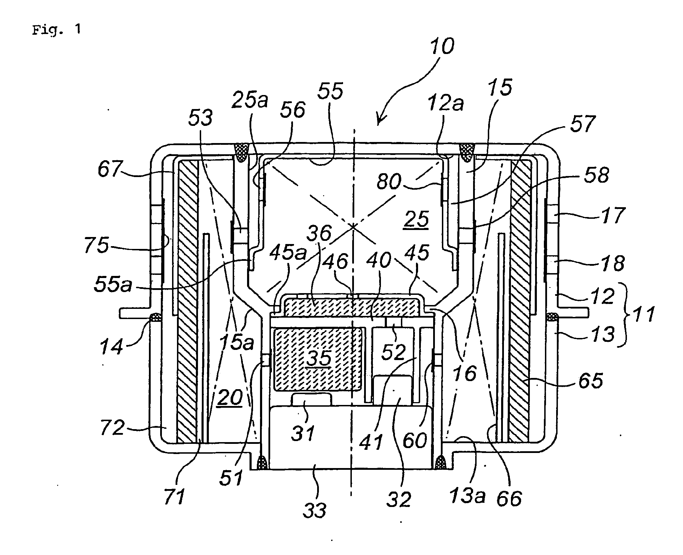

Embodiments will be explained with reference to the drawings. Fig. 1 is an axial sectional view of a gas generator for an air bag of the present invention. In the following description, a vertical relationship such as "upper" or "lower" is indicated with reference to Fig. 1, "the axial direction" means the axial direction of a housing, and "the radial direction" means the radial direction of the housing.

In a gas generator 10, an outer shell container is formed of a housing 11. The housing 11 is formed by bonding a diffuser shell 12 to a closure shell 13. The diffuser shell 12 and the closure shell 13 form an inner accommodating space. The diffuser shell 12 and the closure shell 13 are welded to each other through welded portion 14. In Fig. 1, other black portions also indicates welded portions.

The diffuser shell 12 is provided with a necessary number of gas discharge ports 17 and 18. Diameters of the gas discharge ports 17 and 18 may be the same or different.

A substantially cylindrical inner cylinder 15 is disposed in the housing 11. An upper end edge of the inner cylinder 15 is joined to a ceiling surface 12a of the diffuser shell 12, a lower end edge of the inner cylinder 15 is joined to a bottom surface 13a of the closure shell 13, thereby separating inner and outer spaces from each other.

The inner cylinder 15 has an inclined wall portion 15a which is increased in diameter in the radial direction so that an inner diameter of an upper portion of the inner cylinder 15 (closer to the ceiling surface 12a) becomes larger than an inner diameter of a lower portion of the inner cylinder 15 (closer to the bottom surface 13a). It is preferable to set the shape of the inner cylinder 15 in this manner as shown in Fig. 1 because a capacity in the inner space, especially a capacity ratio of a first combustion chamber 20 and a second combustion chamber 25 can be adjusted (in the range of 4/6 to 9/1, preferably 1/1 to 8/2 for example), while the height of the gas generator 10 is kept short.

An annular (or cylindrical) first combustion chamber 20 is provided in a space outside the inner cylinder 15, and a first gas generating agent (not shown) is accommodated in the first combustion chamber 20. A gas generating agent having a combustion temperature of 1000 to 1700°C can be used as the first gas generating agent.

A second combustion chamber 25 is provided in an upper space of the inner cylinder 15, and a second gas generating agent (not shown) is accommodated in the second combustion chamber 25. An ignition means chamber in which two ignition means are accommodated is provided in a lower space of the inner cylinder 15. A gas generating agent having a combustion temperature of 1000 to 1700°C can be used as the second gas generating agent.

An electric first igniter 31 and a first transfer charge 35 are disposed in a first ignition means chamber. An electric second igniter 32 and a second transfer charge 36 are disposed in a second ignition means chamber. The first igniter 31 and the second igniter 32 are fixed to a single collar 33, and are mounted in parallel to each other in the radial direction. When an air bag module including the gas generator 10 is mounted to a vehicle, the first igniter 31 and the second igniter 32 are connected to a power supply (battery) through a connector and a lead wire. A gas generating agent having a combustion temperature of 1700 to 3000°C can be used as the first and second transfer charges 35 and 36.

A vertical space in the inner cylinder 15, i.e., a space between the second combustion chamber 25, and the first igniter 31 and the second igniter 32 is divided by a flat plate-like partition wall 40 having a skirt portion 41 and a second through hole 52. The flat plate-like partition wall 40 is fitted into the stepped notch 16 of the inner cylinder 15 from the lower side and thus, even when the first igniter 31 is activated, the flat plate-like partition wall 40 is prevented from moving upward by a pressure caused at the time of activation. An inner diameter of the skirt portion 41 is set substantially the same as a diameter of the igniting portion of the igniter 32, and the skirt portion 41 comes into intimate contact with the igniting portion and surrounds the same. Therefore, flame generated by activation of the second igniter 32 moves straight only toward the second through hole 52.

By disposing the flat plate-like partition wall 40 having the skirt portion 41, the second combustion chamber 25 and the two igniters are separated, and the first igniter 31 and the second igniter 32 are separated. Therefore, ignition energy (flame, combustion gas or the like) generated by the activation of the first igniter 31 is prevented from entering the second ignition means chamber and from entering the second combustion chamber 25 through the second through-hole 52.

A first transfer charge 35 charged into an aluminum cap is disposed directly above the first igniter 31. First through holes 51 formed in lower portions of side walls of the inner cylinder 15 bring the first combustion chamber 20 and the first ignition means chamber into communication with each other. Each the first through hole 51 is formed at positions substantially exactly opposite to the center of the first transfer charge 35. The advancing direction of flame generated by the activation of the first igniter 31 is not exactly opposite to the first through hole 51. An aluminum or stainless seal tape 60 is pasted on the first through hole 51 from the inside.

The first through hole 51 and the first transfer charge 35 are exactly opposite to each other in this manner. Thus, when the first igniter 31 is activated, the entire first transfer charge 35 is burnt substantially uniformly.

Further, since the first through-hole 51 is formed in the lower portion of the inner cylinder 15, the ignition energy generated by combustion of the first transfer charge 35 is discharged in the radial direction and then, the direction of the ignition energy is changed to the upward direction and the energy flows out. Therefore, the ignitability of the entire first gas generating agent accommodated in the first combustion chamber 20 is enhanced.

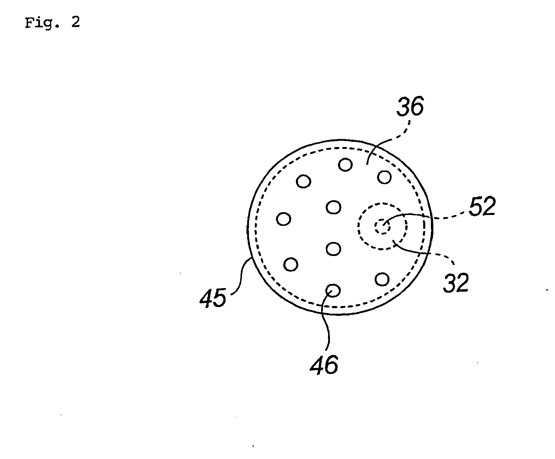

The layout of the second transfer charge 36 will be explained with reference to Fig. 2. Fig. 2 is a plan view showing the layout of the second transfer charge 36.

The second transfer charge 36 is disposed above the second igniter 32 and on the flat plate-like partition wall 40. The second transfer charge 36 is charged into an aluminum cup 45 having plural flame-transferring holes 46. The plural flame-transferring holes 46 are not exactly opposite to the advancing direction (directly above the second igniter 32) of flame caused by activation of the second igniter 32.

By setting the positions of the flame-transferring holes 46 in this manner, when the second igniter 32 is activated and the generated flame advances in the directly upper direction, the flame is not discharged from the flame-transferring holes 46 as it is, the second transfer charge 36 is first ignited and burnt, and ignition energy generated by the combustion of the entire second transfer charge 36 is discharged into the second combustion chamber 25 from the flame-transferring holes 46. Therefore, the flammability of the second gas generating agent accommodated in the second combustion chamber 25 is enhanced.

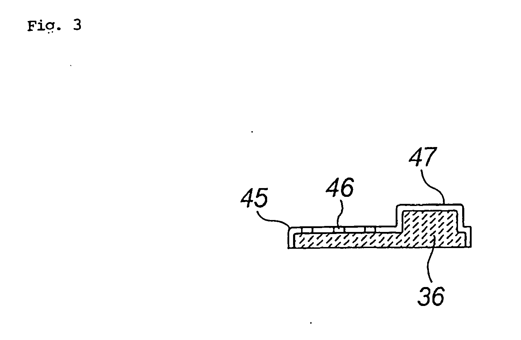

As shown in Fig. 3, the aluminum cap 45 in which the second transfer charge 36 is charged may have a projection 47 directly above the second igniter 32. If the aluminum cap 46 includes the projection 47, the charging amount of the second transfer charge 36 can be increased, and thereby, the ignitability of the second gas generating agent is further enhanced. Even in the aspect shown in Fig. 3, the aluminum cap 46 is provided at its flat surface except the projection 47 with the flame-transferring holes 46.

A bottomed cylindrical retainer 55 is fitted into the second combustion chamber 25 such that an opening of the retainer 55 is directed downward, and an inner wall 25a of the second combustion chamber 25 is pushed in the side wall tip end 55a so that the retainer 55 is fixed. A gap 57 is provided between a side wall of the retainer 55 and the inner wall 25a of the second combustion chamber 25. The gap 57 has such a size that a gas passage can be secured.

The retainer 55 is provided at its side wall with plural openings 56 (nozzles). The height of the openings 56 in the axial direction is higher than the height of a third through-hole 53 formed in the inner cylinder 15.

The third through hole 53 is closed with a stainless seal tape 58 from the outside, and the openings 56 may be closed with aluminum or stainless seal tapes 80 from the inside. Having the opening 56 closed by a stainless seal tape, the inner pressure of the second combustion chamber 25 is temporally increased when the first and second combustion chambers 20 and 25 start combustion at the same time due to simultaneous activation of the two igniters. Thereby, the ignitability of the second gas generating agent is improved.

Since the gap 57 is provided between the side wall of the retainer 55 and the inner wall 25a of the second combustion chamber 25, the third through-hole 53 is prevented from being closed with the second gas generating agent. If the third through-hole 53 is closed by the second gas generating agent, the inner pressure of the second combustion chamber 25 increases excessively. And when the second gas generating agent closing the third through-hole is burnt, the inner pressure is dropped rapidly because of the opened third through-hole, which may disturb stable combustion.

By adjusting heights of the openings 56 and the third through-hole 53, even if the third through-hole 53 is located at lower sides of the second combustion chamber 25 as shown in Fig. 1, a gas generated by combustion of the second gas generating agent passes through the openings 56 located at upper sides of the second combustion chamber 25 and then is discharged from the third through-hole 53. Therefore, flame well runs in the second combustion chamber 25 entirely, and the flammability of the second gas generating agent is enhanced.

The total opening area of the third through-hole 53 is set smaller than the total opening area of the openings 56, and is set smaller than the total opening area of the gas discharging holes 17 and 18.

When the first igniter 31 is first activated and the second igniter 32 is activated later, that is, when the first gas generating agent in the first combustion chamber 20 is first burnt and the second gas generating agent in the second combustion chamber 25 is burnt with delay, the pressure in the second combustion chamber 25 becomes sufficiently higher than the pressure in the first combustion chamber 20. For this reason, by setting the total opening area of the third through-hole 53 as described above, the flow-out speed of the combustion gas from the second combustion chamber is controlled by the third through-hole 53 and thus, the internal pressure in the second combustion chamber 25 at the time of combustion is also controlled by the third through hole 53. Thus, the combustion state in the second combustion chamber 25 is controlled by the third through-hole 53. When the first igniter 31 and the second igniter 32 are activated at the same time, a difference in pressure between the first combustion chamber 20 and the second combustion chamber 25 becomes small and thus, the internal pressure in the second combustion chamber 25 is still higher, but the influence of pressure control by the third through-hole 53 becomes small.

By controlling the combustion state of the second combustion chamber 25 by the third through-hole 53, the following effect can be obtained.

In the case of an automobile colliding at a low speed, when only the first igniter 31 is ignited to burn only the first gas generating agent, the remaining unburned second gas generating agent becomes dangerous at the time of scraping the automobile. For this reason, the second igniter 32 is activated after the activation of the first igniter 31 by 100 milliseconds to ignite and burn the second gas generating agent in some cases. In such a case, if the combustion state of the second combustion chamber 25 can be controlled by the third through-hole 53, it is preferable that the ignitability and flammability of the second gas generating agent is enhanced and NOx or the like is restrained from being generated. Besides, if the generation time of the combustion gas from the second combustion chamber 25 is elongated, such a requirement to elongate the inflation-maintaining time of the air bag can also be satisfied.

A cylindrical filter 65 is disposed between the first combustion chamber 20 and a peripheral wall of the housing 11 (diffuser sheet peripheral wall 12b and closure shell peripheral wall 13b) to remove combustion residue from the combustion gas and cool the combustion gas.

The cylindrical filter 65 can be one obtained by winding cylindrically a metal thin wire (such as an iron wire) having a wire diameter of about 0.3 to 1.2 mm, one obtained by plain-weaving and winding many times the thin wire and compression-molding the same, one obtained by winding a plain woven wire mesh, a plain dutch wire mesh or a twilled dutch wire mesh each having a wire diameter of 0.3 to 0.8 mm, or by winding a combination thereof, or one obtained by interposing ceramic fiber or metal fiber between the above wire mesh.

A structure of the cylindrical filter is appropriately selected in accordance with a kind of a gas generating agent to be used (depending upon the combustion temperature and the amount of combustion residue to be produced). For example, when a gas generating agent having a low combustion temperature (about 1000 to 1700°C) and producing a small amount of combustion residue is used, a filter having a bulk density of 1 to 5 g/cm³, preferably 2 to 3 g/cm³ and thickness of 3 to 10 mm, preferably 3 to 6 mm can be used.

An inner cylindrical shielding plate 66 is disposed inside the cylindrical filter 65. A gap (first gap 71) is provided between the cylindrical filter 65 and the inner cylindrical shielding plate 66. In this case, instead of the gap, part of the inner cylindrical shielding plate 66 which contacts the cylindrical filter 65 (in almost the same width as the gap) can be formed to have a coarse structure to virtually make the same condition as the gap is provided. The coarse structure contracts with the dense structure of the remaining part. When the bulk density of the dense structure is in the above range, a bulk density of the coarse structure can be in the range of 0.1 to 1.0 g/cm³.

A width of each of the gap and the coarse structure is preferably 0.5 to 3 mm, and more preferably 1 to 2 mm.

An outer cylindrical shielding plate 67 is disposed at an outer side of the cylindrical filter 65 in a state in which the outer cylindrical shielding plate 67 is in contact with an outer peripheral surface of the cylindrical filter 65. A gap (second gap 72) is provided between the outer cylindrical shielding plate 67 and a peripheral wall of the housing 11. It is preferable that the width of the second gap 72 is set wider than that of the first gap 71.

The inner cylindrical shielding plate 66 and the outer cylindrical shielding plate 67 do not cover the entire surface of the cylindrical filter 65 as shown in Fig. 1.

The inner cylindrical shielding plate 66 covers a lower portion of the cylindrical filter 65 (in the height range of about 1/2 to 2/3 of the entire height of the cylindrical filter 65) in a state in which one end peripheral edge abuts against the bottom surface 13a. The same state as shown in Fig. 1 may be obtained by first covering the entire inner peripheral surface of the filter 65 with the inner cylindrical shielding plate 66 and providing at a portion of the filter 65 with plural vent holes.

The outer cylindrical shielding plate 67 covers an upper portion of the cylindrical filter 65 (in the height range of about 1/2 to 2/3 of the entire height of the cylindrical filter 65) in a state in which one end peripheral edge abuts against the ceiling surface 12a. The same state as shown in Fig. 1 may be obtained by first covering the entire outer peripheral surface of the filter 65 with the outer cylindrical shielding plate 67 and providing at a portion of the filter 65 with plural vent holes.

By disposing the cylindrical filter 65, the inner cylindrical shielding plate 66 and the outer cylindrical shielding plate 67 in this manner, the filtering effect (filtering of the combustion residue) and cooling effect of the combustion gas are further enhanced.

The seal tapes 75 which close the gas discharge ports 17 and 18 can be set to be ruptured at the same time or only portions of the gas discharge ports 17 and 18 may be ruptured, depending upon the activation state of the igniters (only one of the igniters is activated, or both igniters are activated at the same time or the igniters are activated with time lag).

Next, the operation when the two igniters are activated with time lag in the gas generator 10 for an air bag will be explained.

If the first igniter 31 is activated, the transfer charge 35 is ignited and burnt, the ignition energy ruptures the seal tape 60 and the ignition energy passes through the first through-hole 51 and discharged into the first combustion chamber 20. At that time, the ignition energy is discharged in the radial direction and then is moved in the first combustion chamber 20 upward. Therefore, the ignitability and the flammability of the first gas generating agent are excellent. Since the third through-hole 53 is closed with the stainless seal tape 58, the combustion gas in the first combustion chamber 20 does not flow into the second combustion chamber 25.

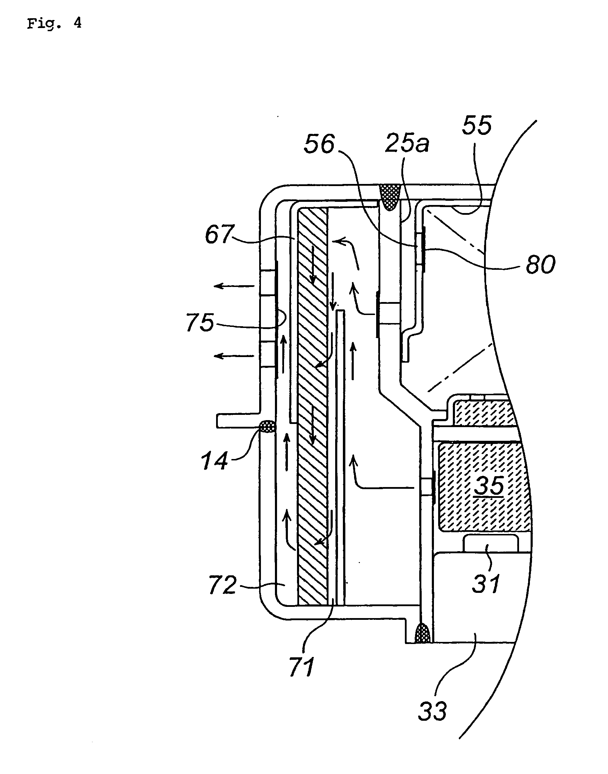

The combustion gas generated in the first combustion chamber 20 (and ignition energy generated by the first ignition means) as well as the combustion gas generated by the second combustion chamber 25 are moved in the flow as shown with the arrows in Fig. 4.

The ignition energy discharged from the first through-hole 51 formed in the peripheral wall of the inner cylinder 15 collides against the inner cylindrical shielding plate 66 which is exactly opposite to the first through hole 51. Thus, the advancing direction of the ignition energy is changed into the upward direction and ignites and the gas generating agent existing in the subsequent advancing direction is burnt. That is, the advancing direction of the ignition energy is changed from the radial direction into the axial direction by the inner cylindrical shielding plate 66, and the ignition energy is supplied to the gas generating agents existing in both the radial direction and the axial direction. Thus, the ignitability and the flammability of the entire first gas generating agent existing in the first combustion chamber 20 are enhanced.

Meanwhile, when the inner cylindrical shielding plate 66 does not exist, the ignition energy discharged radially outward from the first through hole 51 is sufficiently supplied to the first gas generating agent existing in the discharging direction but is less prone to be transmitted to the gas generating agent located upward. This problem remarkably appears when a gas generating agent having poor ignitability is used, but if the inner cylindrical shielding plate 66 is used as described above, this problem does not occurs.

Further, if the inner cylindrical shielding plate 66 is used, it is possible to prevent the ignition energy from colliding against a portion of the cylindrical filter 65 and to prevent the cylindrical filter 65 from being damaged. To obtain this effect, the position of the first through hole 51 in the axial direction is adjusted.

The combustion gases generated in the first combustion chamber 20 and the second combustion chamber 25 enter the cylindrical filter 65 from a portion (or vent hole) which is not covered with the inner cylindrical shielding plate 66, a portion of the gas moves in the cylindrical filter 65 in the axial direction as it is and then, reaches the second gap 72. A remaining portion of the combustion gas passes through the first gap 71 and moves, and passes through the cylindrical filter 65 in the radial direction and reaches the second gap 72. Then, the combustion gas ruptures a portion or all of the seal tape 75, and is discharged from a portion or all of the gas discharge ports 17 and 18 to inflate the air bag.

By allowing the combustion gas to pass through the first gap 71 in this manner, the combustion gas can pass through the cylindrical filter 65 in the axial direction, the entire cylindrical filter 65 can be used, a long contact time between the combustion gas and the cylindrical filter 65 can be secured and thus, the cooling and filtering effects of the combustion gas can be enhanced.

After a slight time lag, the second igniter 32 is activated. At that time, the flame advances through the second through-hole 52 but, since the advancing direction of the flame and the flame-transferring holes 46 are not exactly opposite to each other, the ignition energy is discharged into the second combustion chamber 25 from the flame-transferring holes 46 after all the second transfer charge 36 charged into the aluminum cup 45 is ignited and burnt.

When the ignition energy enters, the second gas generating agent in the second combustion chamber 25 is ignited and burnt. Since the height positions of the openings 56 of the retainer 55 and the third through-hole 53 are adjusted as described above, the flame runs through the entire second combustion chamber 25 excellently, and the ignitability and the flammability of the second gas generating agent are excellent. Further, when the openings 56 are closed with the seal tapes 80, the initial flammability of the second gas generating agent is enhanced.

A gas generated in the second combustion chamber 25 is discharged from the third through-hole 53 in the radial direction and flows into the first combustion chamber 20 and then, the gas is cooled and filtered through the cylindrical filter 65 and discharged from the gas discharge ports 17 and 18 in the above-described manner to further inflate the air bag.

### (2) Second Embodiment

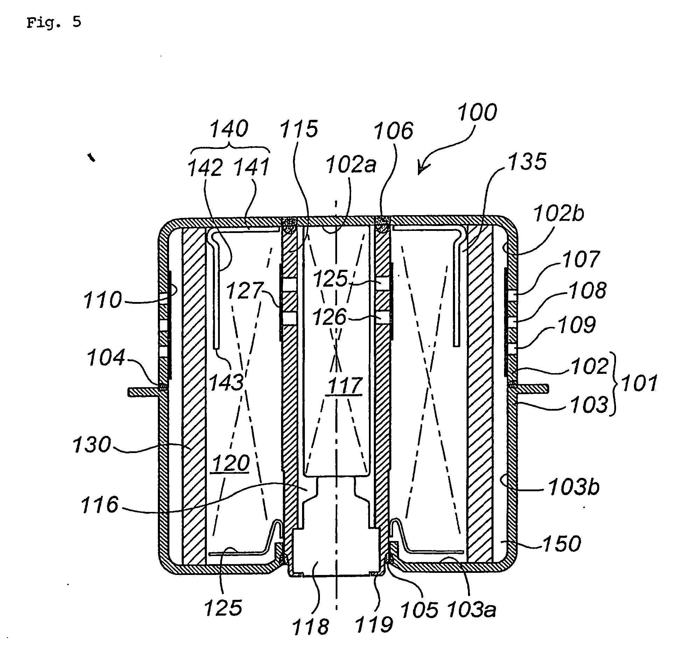

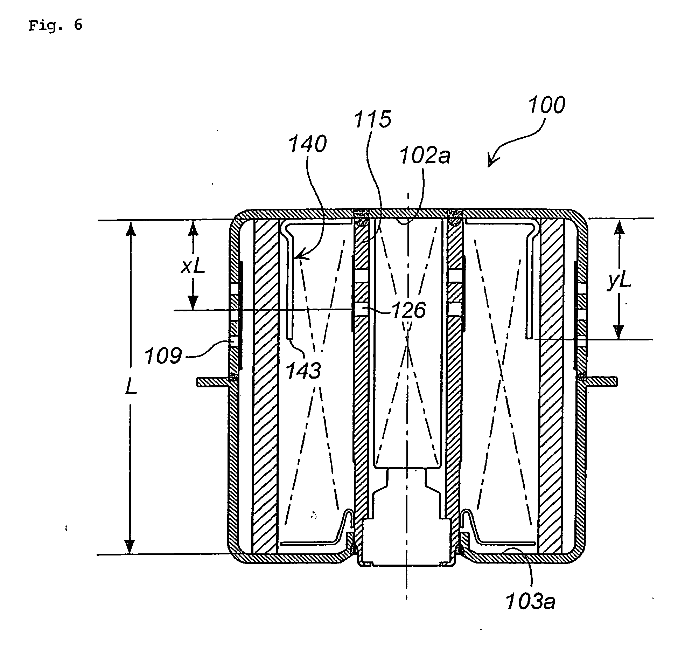

The present invention will be explained with reference to the drawings. Fig. 5 is an axial sectional view of the gas generator for an air bag. Fig. 6 is a view for explaining a positional relationship of constituent elements shown in Fig. 5. In the following description, "the axial direction" means the axial direction of a housing, and "the radial direction" means the radial direction of the housing.

The gas generator 100 for an air bag is formed with an outer shell container formed of a housing 101. The housing 101 is formed by joining a diffuser shell 102 and a closure shell 103 with each other. The diffuser shell 102 and the closure shell 103 form an inner accommodating space. The diffuser shell 102 and the closure shell 103 are welded at a welding portion 104.

The diffuser shell 102 is provided with a necessary number of gas discharge ports 107, 108 and 109, and the ports are closed with aluminum seal tapes 110 for preventing moisture. Diameters of the gas discharge ports 107, 108 and 109 may be the same or different.

A substantially cylindrical inner cylinder 115 is disposed in the housing 101. An upper end edge of the inner cylinder 115 is welded and fixed to a ceiling surface 102a of the diffuser shell 102 at a welding portion 106, and a lower end edge of the inner cylinder 115 is inserted into an opening of a bottom surface 103a of the closure shell 103, and welded and fixed by a welded portion 105 so that inner and outer spaces are separated from each other.

A cylindrical combustion chamber 120 is provided in an outer space of the inner cylinder 115, and a gas generating agent (not shown) is accommodated therein. An agent having a combustion temperature of 1000 to 1700°C can be used as the gas generating agent. A retainer 125 adjusts a capacity of the combustion chamber 120 in accordance with an amount of the gas generating agent.

An inner space of the inner cylinder 115 is an ignition means chamber 116. A transfer charge 117 charged into an aluminum cup and an electric igniter 118 are disposed in the ignition means chamber 116. The igniter 118 is fixed by cramping an opening peripheral edge 119 of the inner cylinder 115. A gas generating agent having a combustion temperature of 1700 to 3000°C can be used as the transfer charge 117. When an air bag module including the gas generator 100 is mounted to a vehicle, the igniter 118 is connected to a power supply (battery) through a connector and a lead wire.

An upper portion of a peripheral wall of the inner cylinder 115 (in the vicinity of end portion opposite to the mounting position of the igniter 118) is provided with a necessary number of communication holes 125 and 126 which bring the ignition means chamber 116 into communication with the combustion chamber 120. The communication holes 125 and 126 are closed with aluminum seal tapes 127, but if a seal is secured between the electric igniter 118 and the inner cylinder 115, the seal tapes 127 are unnecessary.

A cylindrical filter 130 is disposed between the combustion chamber 120 and a peripheral wall of the housing 101 (between a diffuser shell peripheral wall 102b and a closure shell peripheral wall 103b). The cylindrical filter 130 removes the combustion residue and cools the combustion gas. The same cylindrical filter as that shown in Fig. 1 can be used as the cylindrical filter 130.

An inner cylindrical shielding plate 140 is disposed inside the cylindrical filter 130. A gap (first gap 135) is provided between the cylindrical filter 130 and the inner cylindrical shielding plate 140. The first gap 135 serves as a portion having air permeability. Instead of providing the gap 135, part of the cylindrical filter 130 that contacts with the inner cylindrical shielding plate 140 (in the same width as the gap 135) can be formed to have a coarse structure, thereby providing the same state in which the gap 135 is virtually provided. A width of the gap and a width of the coarse structure portion may be the same as those shown in Fig. 1.

The inner cylindrical shielding plate 140 may be the same as the inner cylindrical shielding plate 66 shown in Fig. 1. In this embodiment, the inner cylindrical shielding plate 140 comprises an annular bottom surface 141 and an annular peripheral wall 142 provided virtically with the annular bottom surface 141. It is preferable that an outer diameter of the annular bottom surface 141 is greater than an outer diameter of the annular peripheral wall 142. In Fig. 5, a width of the annular bottom surface 141 (difference between a diameter of an outer circumference and a diameter of an inner circumference) and a distance between the cylindrical filter 130 and the inner cylinder 115 in the radial direction are set substantially equal to each other.

If the inner cylindrical shielding plate 140 comprising the annular bottom surface 141 and the annular peripheral wall 142 is used as the inner cylindrical shielding plate 140, it becomes easy to mount the inner cylindrical shielding plate 140 and easy to form the first gap 135.

The inner cylindrical shielding plate 140 is disposed such that the annular bottom surface 141 is in contact with a housing ceiling surface 102a and an outer peripheral edge of the annular bottom surface 141 abuts against an inner peripheral surface of the cylindrical filter 130. The inner cylindrical shielding plate 140 may also be disposed such that the annular bottom surface 141 comes into contact with the housing bottom surface 103a in accordance with positions of the communication holes 125 and 126, the gas discharge ports 107 or the like.

It is preferable that, if a height (distance) from the housing ceiling surface 102a to the bottom surface 130a is defined as L, a relationship between a forming position xL of the communication hole 126 provided in the peripheral wall of the inner cylinder 115 in the axial direction of the housing and a position yL of the inner cylindrical shielding plate 140 (tip end 143) satisfies both the following conditions (a) and (b), and preferably, it also satisfies (c). Also when the annular bottom surface 141 is disposed such that it comes into contact with the housing bottom surface 103a, the same relationship is satisfied:
(a) "x" in xL is 0.05 to 0.6, "y" in yL is 0.3 to 0.8 (here, x is determined based on a center of the communication hole 126) .
(b) the communication hole 126 and the inner cylindrical shielding plate 140 are exactly opposite to each other. That is, a relationship of xL<yL (=x<y) is satisfied. Here, x is determined based on the center of the communication hole 126, but it is preferable that the tip end 143 is lower than any position of the opening of the lowest communication hole 126.
(c) a straight line connecting centers of the gas discharge ports 107, 108 and 109 and centers of the communication holes 125 and 126 is shielded by the inner cylindrical shielding plate 140.

If the conditions (a) and (b) are satisfied, the following effect can be obtained. The igniter 118 is activated and then the transfer charge 117 is ignited and burnt, thereby generating ignition energy. When the ignition energy is discharged from the communication holes 125 and 126, the ignition energy absolutely comes into contact with the cylindrical filter 130 after the ignition energy collides against the cylindrical filter 130. Therefore, since the ignition energy does not intensively collide against the cylindrical filter 130 and thus, the cylindrical filter 130 is not damaged and its function is not deteriorated.

The advancing direction of the ignition energy which has collided against the inner cylindrical shielding plate 140 is changed into the downward direction (opposite from the direction shown in Fig. 4), the ignition energy ignites and burns the gas generating agent existing in the subsequent advancing direction, and the ignitability and flammability of the entire amount of gas generating agent are enhanced like the gas generator 10 shown in Fig. 1.

When the communication holes 125 and 126 and the gas discharge ports 107, 108 and 109 are disposed on substantially the same plane as shown in Fig. 5, and when there is no inner cylindrical shielding plate 140, the ignition energy is discharged outside the housing 101 from the gas discharge ports 107, 108 and 109 at a time and thus, the gas generating agent is not ignited excellently. However, if the condition (c) is satisfied, this problem is not occurred.

The second gap 150 is provided between the cylindrical filter 130 and the housing peripheral wall (between the diffuser shell peripheral wall 102b and the closure shell peripheral wall 103b).

In the gas generator 100 shown in Fig. 5, the same plate as the outer cylindrical shielding plate 67 shown in Fig. 1 can be disposed. In that case, like the structure shown in Fig. 1, the filtering and cooling functions by the cylindrical filter 130 are enhanced. When the outer cylindrical shielding plate is disposed, it is disposed such that one end opening peripheral edge of the plate comes into contact with the housing bottom surface 103a, the other end opening peripheral edge is disposed with a gap between itself and the housing ceiling surface 102a, and a gap 150 is generated between itself and the housing peripheral wall having the gas discharge ports 107, 108 and 109.

## Claims

1. A gas generator (10;100) for an air bag comprising a housing (11 ;101) having a gas discharge port (17,18;107,108,109), an ignition means chamber accommodating therein ignition means (31,32;118) which is activated by the impact, and a combustion chamber (20,25; 120) accommodating therein a gas generating agent which is ignited and burnt to generate a combustion gas, a cylindrical filter (65; 130) disposed between the combustion chamber (20,25;120) and the gas discharge port (17,18;107,108,109), in which the combustion gas passes through the filter (65;130) and is discharged from the gas discharge port (17,18;107,108,109), wherein
an inner cylindrical shielding plate (66; 140) is disposed inside the cylindrical filter (65; 130),
wherein an upper end opening peripheral edge of the inner cylindrical shielding plate (66;140) comes into contact with a housing ceiling surface (12a;102a) and a combustion gas can pass between the lower end opening peripheral edge and a housing bottom surface (13a;103a), a portion (71;135) having excellent air permeability is provided between an inner peripheral surface of the cylindrical filter (65; 130) and the inner cylindrical shielding plate (66;140), wherein a space is provided between the cylindrical filter (65;130) and the inner cylindrical shielding plate (66;140),
wherein an inner space of an inner cylinder (15;115) disposed in a central portion of the housing (11;101) forms the ignition means chamber, the ignition means chamber and the combustion chamber (20,25; 120) are in communication with each other through a communication hole (53;125,126) formed in a peripheral wall of the inner cylinder (15; 115), wherein said communication hole (53;125,126) formed in the peripheral wall of the inner cylinder (15,115) faces the inner cylindrical shielding plate (66;140),
**characterized in that** the inner cylindrical shielding plate (140) comprises an annular bottom surface (141) and an annular peripheral wall (142) provided vertically with the annular bottom surface, an outer diameter of the annular bottom surface (141) is set greater than an outer diameter of the annular peripheral wall (142), and **in that**
the annular bottom surface (141) comes into contact with the housing ceiling surface (102a), an inner peripheral edge of the annular bottom surface (141) abuts against an inner cylinder (115) peripheral wall, or an outer peripheral edge of the annular bottom surface (141) abuts against an inner peripheral surface of the cylindrical filter (130).

2. A gas generator (10;100) for an air bag according to claim 1wherein
a relationship between a forming position (xL) of said communication hole (126), which is formed in the peripheral wall of the inner cylinder (15;115), in an axial direction of the housing (11;101) and a position (yL) of a tip end (143) of the inner cylindrical shielding plate(66;140) is set such that if a height from the housing ceiling surface (12a;102a) to the housing bottom surface (13a;103a) is defined as L,
the communication hole (126) is formed in a peripheral wall of the inner cylinder (115) in the range of 0.05 L to 0. 6 L from the housing ceiling surface (12a;102a),
the position (yL) of the tip end (143) of the inner cylindrical shielding plate (140) or the forming position of the vent hole exists in the range of 0.3 L to 0.8 L from the housing ceiling surface (12a;102a), and
the communication hole (126) and the inner cylindrical shielding plate(140) are exactly opposite to each other.

3. A gas generator (10;100) for an air bag according to any one of claims 1 to 2, wherein
an outer cylindrical shielding plate (67) is disposed outside the cylindrical filter (65; 130),
one end opening peripheral edge of the outer cylindrical shielding plate (67) comes into contact with the housing ceiling surface (12a;102a) or the housing bottom surface (13a;103a), the other end opening peripheral edge is disposed at a distance from the housing bottom surface (13a;103a) or the housing ceiling surface (12a;102a), and a gap (72) is generated between the outer cylindrical shielding plate (67) and the housing peripheral wall having the a gas discharge port (17,18;107,108,109).

4. A gas generator (10;100) for an air bag according to any one of claims 1 to 2, wherein
an outer cylindrical shielding plate(67) is further disposed outside the cylindrical filter (65; 130),
one end opening peripheral edge of the outer cylindrical shielding plate(67) comes into contact with the housing ceiling surface (12a,102a) or the housing bottom surface (13a;103a), the other end opening peripheral edge of the outer cylindrical shielding plate (67) comes into contact with the housing bottom surface (13a;103a) or the housing ceiling surface (12a;102a), the other end opening peripheral edge has a vent hole, a gap (72) is generated between the outer cylindrical shielding plate (67) and the housing peripheral wall having the gas discharge port (17,18;107,108,109).

5. A gas generator (10;100) for an air bag according to any one of claims 1 to 4, wherein
a portion having excellent air permeability provided between an inner peripheral surface of the cylindrical filter (65; 130) and an inner cylindrical shielding plate (66;140) is a cylindrical space (71) provided between the inner peripheral surface of the cylindrical filter (65; 130) and the inner cylindrical shielding plate (66;140) or a coarse structure of the cylindrical filter (65; 130).

6. A gas generator for an air bag according to any one of claims 1 to 5,
wherein
a bulk density of the cylindrical filter (65;130) is 1 to 5g/cm³ , and a thickness of the cylindrical filter (65;130) is 3 to 10 mm.

7. A gas generator (10;100) for an air bag according to any one of claims 1 to 6, wherein
a width of the portion having excellent air permeability provided between a surface of the cylindrical filter (65;130) and the inner cylindrical shielding plate (66;140) is 0.5 to 3 mm.

8. A gas generator (10;100) for an air bag according to any one of claims 1 to 7, wherein
the ignition means comprises an electric igniter (31,32; 118) which is activated by igniting current and a transfer charge (35,36;117) which is ignited by activation of the electric igniter (31,32; 118), a gas generating agent having a combustion temperature of 1000 to 3000°C is used as the transfer charge (35,36;118), and a gas generating agent having a combustion temperature of 1000 to 1700°C is used as the gas generating agent for inflating the air bag, which is disposed in the combustion chamber (20,25; 120).

## Patentansprüche

1. Ein Gasgenerator (10; 100) für einen Airbag, umfassend ein Gehäuse (11; 101) mit einem Gasauslasskanal (17, 18; 107, 108, 109), eine Zündmittelkammer, die ein Zündmittel (31, 32; 118), welches durch den Aufprall aktiviert wird, darin aufnimmt, und eine Brennkammer (20, 25; 120), die einen Gas erzeugenden Stoff, welcher entzündet und verbrannt wird, um Verbrennungsgas zu erzeugen, darin aufnimmt, einen zylindrischen Filter (65; 130), der zwischen der Brennkammer (20, 25; 120) und dem Gasauslasskanal (17, 18; 107, 108, 109) angeordnet ist, wobei das Verbrennungsgas durch den Filter (65; 130) hindurchströmt und aus dem Gasauslasskanal (17, 18; 107, 108, 109) abgelassen wird, wobei eine innere zylindrische Abschirmplatte (66; 140) innerhalb des zylindrischen Filters (65; 130) angeordnet ist, wobei eine obere und endseitige Öffnungsumfangskante der inneren zylindrischen Abschirmplatte (66; 140) mit einer Gehäusedeckenfläche (12a; 102a) in Kontakt gelangt und ein Verbrennungsgas zwischen der unteren und endseitigen Öffnungsumfangskante und einer Gehäusebodenfläche (13a; 103a) hindurchströmen kann, ein Abschnitt (71; 135) mit exzellenter Luftpermeabilität zwischen einer inneren umfangsseitigen Oberfläche des zylindrischen Filters (65; 130) und der inneren zylindrischen Abschirmplatte (66; 140) ausgebildet ist, wobei ein Raum zwischen dem zylindrischen Filter (65; 130) und der inneren zylindrischen Abschirmplatte (66; 140) ausgebildet ist, wobei ein innerer Raum eines inneren Zylinders (15; 115), der in einem mittleren Abschnitt des Gehäuses (11; 101) angeordnet ist, die Zündmittelkammer bildet, wobei sich die Zündmittelkammer und die Brennkammer (20, 25; 120) durch eine Kommunikationsöffnung (53; 125, 126), die in einer umfangsseitigen Wand des inneren Zylinders (15; 115) ausgebildet ist, miteinander in Kommunikation befinden, wobei die besagte Kommunikationsöffnung (53; 125, 126), die in der umfangsseitigen Wand des inneren Zylinders (15, 115) ausgebildet ist, der inneren zylindrischen Abschirmplatte (66; 140) zugewandt ist,
**dadurch gekennzeichnet, dass** die innere zylindrische Abschirmplatte (140) eine ringförmige Bodenfläche (141) und eine ringförmige Umfangswand (142), die in einer vertikalen Art und Weise mit der ringförmigen Bodenfläche ausgebildet ist, aufweist, wobei ein äußerer Durchmesser der ringförmigen Bodenfläche (141) größer bemessen ist als ein äußerer Durchmesser der ringförmigen Umfangswand (142),
und dass die ringförmige Bodenfläche (141) mit der Gehäusedeckenfläche (1 02a) in Kontakt gelangt, eine innere umfangsseitige Kante der ringförmigen Bodenfläche (141) sich gegen eine umfangsseitige Wand des inneren Zylinders (115) abstützt, oder eine äußere umfangsseitige Kante der ringförmigen Bodenfläche (141) sich gegen eine innere umfangsseitige Oberfläche des zylindrischen Filters (130) abstützt.

2. Ein Gasgenerator (10; 100) für einen Airbag im Einklang mit Anspruch 1, wobei ein Verhältnis zwischen einer Formungsposition (xL) der besagten Kommunikationsöffnung (126), die in der umfangsseitigen Wand des inneren Zylinders (15; 115) ausgebildet ist, in einer axialen Richtung des Gehäuses (11; 101) und einer Position (yL) einer endseitigen Spitze (143) der inneren zylindrischen Abschirmplatte (66; 140) derart festgelegt ist, dass, wenn eine Höhe von der Gehäusedeckenfläche (12a; 102a) bis zu der Gehäusebodenfläche (13a; 103a) als L definiert ist,
die Kommunikationsöffnung (126) in einer umfangsseitigen Wand des inneren Zylinders (115) in dem Bereich von 0,05 L bis 0,6 L von der Gehäusedeckenfläche (12a; 102) ausgebildet ist,
wobei die Position (yL) der endseitigen Spitze (143) der inneren zylindrischen Abschirmplatte (140) oder die Formungsposition der Entlüftungsbohrung in dem Bereich von 0,3 L bis 0,8 L von der Gehäusedeckenfläche (12a; 102a) existiert, und
wobei die Kommunikationsöffnung (126) und die innere zylindrische Abschirmplatte (140) einander exakt gegenüberliegen.

3. Ein Gasgenerator (10; 100) für einen Airbag im Einklang mit einem der Ansprüche 1 bis 2,
wobei eine äußere zylindrische Abschirmplatte (67) außerhalb des zylindrischen Filters (65; 130) angeordnet ist,
wobei eine endseitige Öffnungsumfangskante der äußeren zylindrischen Abschirmplatte (67) mit der Gehäusedeckenfläche (12a; 102a) oder mit der Gehäusebodenfläche (13a; 103a) in Kontakt gelangt, wobei die andere endseitige Öffnungsumfangskante in einem Abstand von der Gehäusebodenfläche (13a; 103a) oder der Gehäusedeckenfläche (12a; 102a) angeordnet ist, und wobei ein Spalt (72) zwischen der äußeren zylindrischen Abschirmplatte (67) und der Gehäuseumfangswand mit dem Gasauslasskanal (17, 18; 107, 108, 109) ausgebildet ist.

4. Ein Gasgenerator (10; 100) für einen Airbag im Einklang mit einem der Ansprüche 1 bis 2,
wobei eine äußere zylindrische Abschirmplatte (67) weiter außerhalb des zylindrischen Filters (65; 130) angeordnet ist,
wobei eine endseitige Öffnungsumfangskante der äußeren zylindrischen Abschirmplatte (67) mit der Gehäusedeckenfläche (12a, 102a) oder mit der Gehäusebodenfläche (13a; 103a) in Kontakt gelangt, wobei die andere endseitige Öffnungsumfangskante der äußeren zylindrischen Abschirmplatte (67) mit der Gehäusebodenfläche (13a; 103a) oder mit der Gehäusedeckenfläche (12a; 102a) in Kontakt gelangt, wobei die andere endseitige Öffnungsumfangskante eine Entlüftungsöffnung aufweist, und wobei ein Spalt (72) zwischen der äußeren zylindrischen Abschirmplatte (67) und der Gehäuseumfangswand mit dem Gasauslasskanal (17, 18; 107, 108, 109) erzeugt wird.

5. Ein Gasgenerator (10; 100) für einen Airbag im Einklang mit einem der Ansprüche 1 bis 4,
wobei ein Abschnitt mit herausragender Luftpermeabilität, der zwischen der inneren umfangsseitigen Oberfläche des zylindrischen Filters (65; 130) und einer inneren zylindrischen Abschirmplatte (66; 140) ausgebildet ist, ein zylindrischer Raum (71), der zwischen der inneren umfangsseitigen Oberfläche des zylindrischen Filters (65; 130) und der inneren zylindrischen Abschirmplatte (66; 140) ausgebildet ist, oder eine raue Struktur des zylindrischen Filters (65; 130) ist.

6. Ein Gasgenerator (10; 100) für einen Airbag im Einklang mit einem der Ansprüche 1 bis 5,
wobei eine Raumdichte des zylindrischen Filters (65; 130) 1 bis 5 g/cm³ beträgt, und eine Dicke des zylindrischen Filters (65; 130) 3 bis 10 mm beträgt.

7. Ein Gasgenerator (10; 100) für einen Airbag im Einklang mit einem der Ansprüche 1 bis 6,
wobei eine Breite des Abschnitts mit herausragender Luftpermeabilität, der zwischen einer Oberfläche des zylindrischen Filters (65; 130) und der inneren zylindrischen Abschirmplatte (66; 140) ausgebildet ist, 0,5 bis 3 mm beträgt.

8. Ein Gasgenerator (10; 100) für einen Airbag im Einklang mit einem der Ansprüche 1 bis 7, wobei
das Zündmittel eine elektrische Zündvorrichtung (31, 32; 118) umfasst, welche durch einen Zündstrom aktiviert wird, und eine Transferladung (35, 36; 117), welche durch Aktivierung der elektrischen Zündvorrichtung (31, 32; 118) aktiviert wird, wobei ein Gas erzeugender Stoff mit einer Verbrennungstemperatur von 1000 bis 3000 °C als die Transferladung (35, 36; 118) zum Einsatz gebracht wird, und wobei ein Gas erzeugender Stoff mit einer Verbrennungstemperatur von 1000 bis 1700 °C als der Gas erzeugende Stoff zum Aufblasen des Airbags zum Einsatz gebracht wird und innerhalb der Brennkammer (20, 25; 120) angeordnet ist.

## Revendications

1. Générateur de gaz (10 ; 100) pour un coussin d'air comprenant un logement (11 ; 101) ayant un orifice d'évacuation de gaz (17, 18 ; 107, 108, 109), une chambre de moyen d'allumage contenant un moyen d'allumage (31, 32 ; 118) qui est activé par impact, et une chambre de combustion (20, 25 ; 120) contenant un agent de génération de gaz qui est allumé et brûlé pour générer un gaz de combustion, un filtre cylindrique (65 ; 130) disposé entre la chambre de combustion (20, 25 ; 120) et l'orifice d'évacuation de gaz (17, 18 ; 107, 108, 109), dans lequel le gaz de combustion passe à travers le filtre (65 ; 130) et est évacué depuis l'orifice d'évacuation de gaz (17, 18 ; 107, 108, 109), où
une plaque de blindage cylindrique interne (66 ; 140) est disposée à l'intérieur du filtre cylindrique (65 ; 130),
dans lequel un bord périphérique d'ouverture d'extrémité supérieure de la plaque de blindage cylindrique interne (66 ; 140) vient en contact avec une surface supérieure de logement (12a ; 102a) et un gaz de combustion peut passer entre le bord périphérique d'ouverture d'extrémité inférieure et une surface inférieure de logement (13a ; 103a), une partie (71 ; 135) ayant une excellente perméabilité à l'air est prévue entre une surface périphérique interne du filtre cylindrique (65 ; 130) et la plaque de blindage cylindrique interne (66 ; 140), où un espace est fourni entre le filtre cylindrique (65 ; 130) et la plaque de blindage cylindrique interne (66 ; 140), dans lequel un espace interne d'un cylindre interne (15 ; 115) disposé dans une partie centrale du logement (11 ; 101) forme la chambre de moyen d'allumage, la chambre de moyen d'allumage et la chambre de combustion (20, 25 ; 120) étant en communication l'une avec l'autre à travers un trou de communication (53 ; 125, 126) formé dans une paroi périphérique du cylindre interne (15 ; 115), dans lequel ledit trou de communication (53 ; 125, 126) formé dans la paroi périphérique du cylindre interne (15 ; 115) fait face à la plaque de blindage cylindrique interne (66 ; 140),
**caractérisé en ce que** la plaque de blindage cylindrique interne (140) comprend une surface inférieure annulaire (141) et une paroi périphérique annulaire (142) prévue à la verticale de la surface inférieure annulaire (141), un diamètre externe de la surface inférieure annulaire (141) est défini comme étant supérieur à un diamètre externe de la paroi périphérique annulaire (142), et **en ce que**
la surface inférieure annulaire (141) vient en contact avec la surface supérieure de logement (102a), un bord périphérique interne de la surface inférieur annulaire (141) vient en butée contre une paroi périphérique de cylindre interne (115), ou un bord périphérique externe de la surface inférieure annulaire (141) vient en butée contre une surface périphérique interne du filtre cylindrique (130).

2. Générateur de gaz (10 ; 100) pour un coussin d'air selon la revendication 1, dans lequel une relation entre une position de formation (xL) dudit trou de communication (126), qui est formée dans la paroi périphérique du cylindre interne (15 ; 115), dans une direction axiale du logement (11 ; 101) et une position (yL) d'une extrémité de pointe (143) de la plaque de blindage cylindrique interne (66 ; 140) est définie de telle sorte que si une hauteur depuis la surface supérieure de logement (12a ; 102a) jusqu'à la surface inférieure de logement (13a ; 103a) est définie en tant que L,
le trou de communication (126) est formé dans une paroi périphérique du cylindre interne (115) dans la plage de 0,05 L à 0,6 L depuis la surface supérieure de logement (12a ; 102a),
la position (yL) de l'extrémité de pointe (143) de la plaque de blindage cylindrique interne (140) ou la position de formation du trou d'aération existe dans la plage de 0,3 L à 0,8L depuis la surface supérieure de logement (12a ; 102a), et
le trou de communication (126) et la plaque de blindage cylindrique interne (140) se trouvent exactement à l'opposé l'un de l'autre.

3. Générateur de gaz (10 ; 100) pour un coussin d'air selon l'une quelconque des revendications 1 à 2, dans lequel
une plaque de blindage cylindrique externe (67) est disposée à l'extérieur du filtre cylindrique (65 ; 130),
un bord périphérique d'ouverture d'extrémité de la plaque de blindage cylindrique externe (67) vient en contact avec la surface supérieure de logement (12a ; 102a) ou la surface inférieure de logement (13a ; 103a), l'autre bord périphérique d'ouverture d'extrémité est disposé à une distance de la surface inférieure de logement (13a ; 103a) ou de la surface supérieure de logement (12a; 102a), et un écart (72) est généré entre la plaque de blindage cylindrique externe (67) et la paroi périphérique de logement ayant l'orifice d'évacuation de gaz (17, 18 ; 107, 108, 109).

4. Générateur de gaz (10 ; 100) pour un coussin d'air selon l'une quelconque des revendications 1 à 2, dans lequel
une plaque de blindage cylindrique externe (67) est en outre disposée à l'extérieur du filtre cylindrique (65 ; 130),
un bord périphérique d'ouverture d'extrémité de la plaque de blindage cylindrique externe (67) vient en contact avec la surface supérieure de logement (12a ; 102a) ou la surface inférieure de logement (13a ; 103a), l'autre bord périphérique d'ouverture d'extrémité de la plaque de blindage cylindrique externe (67) vient en contact avec la surface inférieure de logement (13a ; 103a) ou la surface supérieure de logement (12a ; 102a), l'autre bord périphérique d'ouverture d'extrémité a un trou d'aération, un écart (72) est généré entre la plaque de blindage cylindrique externe (67) et la paroi périphérique de logement ayant l'orifice d'évacuation de gaz (17, 18 ; 107, 108, 109).

5. Générateur de gaz (10 ; 100) pour un coussin d'air selon l'une quelconque des revendications 1 à 4, dans lequel
une partie dotée d'une excellente perméabilité à l'air fournie entre une surface périphérique interne du filtre cylindrique (65 ; 130) et une plaque de blindage cylindrique interne (66 ; 140) est un espace cylindrique (71) prévu entre la surface périphérique interne du filtre cylindrique (65 ; 130) et la plaque de blindage cylindrique interne (66 ; 140) ou une structure grossière du filtre cylindrique (65; 130).

6. Générateur de gaz pour un coussin d'air selon l'une quelconque des revendications 1 à 5, dans lequel
une masse volumique apparente du filtre cylindrique (65 ; 130) est de 1 à 5 g/cm³, et une épaisseur du filtre cylindrique (65 ; 130) est de 3 à 10 mm.

7. Générateur de gaz (10 ; 100) pour un coussin d'air selon l'une quelconque des revendications 1 à 6, dans lequel
une largeur de la partie ayant une excellente perméabilité à l'air prévue entre une surface du filtre cylindrique (65 ; 130) et la plaque de blindage cylindrique interne (66 ; 140) est de 0,5 à 3 mm.

8. Générateur de gaz (10 ; 100) pour un coussin d'air selon l'une quelconque des revendications 1 à 7, dans lequel
le moyen d'allumage comprend un allumeur électrique (31, 32 ; 118) qui est activé en allumant le courant et une charge de transfert (35, 36 ; 117) qui est allumée par l'activation de l'allumeur électrique (31, 32 ; 118), un agent de génération de gaz ayant une température de combustion de 1 000 à 3 000 °C est utilisé en tant que charge de transfert (35, 36 ; 118), et un agent de génération de gaz ayant une température de combustion de 1 000 à 1 700 °C est utilisé en tant qu'agent de génération de gaz pour gonfler le coussin d'air, qui est disposé dans la chambre de combustion (20, 25 ; 120).
